# EUROPEAN PATENT APPLICATION

(11) **EP 1 705 572 A1**
(43) Date of publication of application: **27.09.2006**
(21) Application number: 05703337.5
(22) Date of filing: 06.01.2005
(51) Int. Cl.: G06F 12/00, G06F 12/16

(54) **INFORMATION RECORDING MEDIUM**

(30) Priority: 09.01.2004 JP 2004003787
(71) Applicant: MATSUSHITA ELECTRIC INDUSTRIAL CO., LTD., Osaka 571-8501 (JP)
(72) Inventor: OKADA, Takanori Mat. Elec. Ind. Co., Ltd.IPROC, Chuo-ku, Osaka-shi, Osaka 540-6319 (JP); ISHIDA, Keiichi Mat. Elec. Ind. Co., Ltd. IPROC, Chuo-ku, Osaka-shi, Osaka 540-6319 (JP); SAITOH, Hiroshi Mat. Elec. Ind. Co., Ltd., IPROC, Chuo-ku, Osaka-shi, Osaka 540-6319 (JP)
(74) Representative: Urner, Peter
(86) International application number: PCT/JP2005/000069
(87) International publication number: WO 2005/066787

(57) **Abstract**

It is possible to solve the problem that a memory block of a group containing information frequently updated quickly reaches the rewrite service life end when the number of spare blocks prepared in a non-volatile semiconductor recording medium cannot be modified or when the memory block is divided into a plurality of groups so as to be processed alternately. The non-volatile semiconductor recording medium includes a partition management information area and a partition area. Partition area start position information is recorded in the partition management information area. The start position information contains a value assuring a predetermined area between the end of the partition management information area and the head of the partition area. The area assured between the end of the partition management information area and the head of the partition area is set to a state where data is physically erased.

## Description

### FIELD OF THE INVENTION

The present invention relates to a recording medium of non-volatile semiconductor and a method of recording information in the medium.

### DESCRIPTION OF THE RELATED ART

In recent years, a semiconductor memory card with a built-in recording medium of non-volatile semiconductor capable of electrically recording and erasing data and retaining the data even after power is turned off has increasingly become widely used. A device for recording and reproducing the data with respect to the semiconductor memory card of this type can be constructed to reduce in size, weight and generation of mechanical failures because it requires a fewer number of mechanically movable parts than in a conventional tape medium and disk medium. A memory element is equipped with an increasingly larger capacity and an increasingly higher recording / reproduction rate, and the semiconductor memory card is now beginning to be used in the applications for image and audio recording.

The information recorded in the semiconductor memory card such as the audio and image is generally managed as a file according to a file system. In the file system, a size of each file, recording date and time, and a busy and empty condition of recording regions such as cluster and sector are managed, and such a file management information is recorded in the recording medium together with the image and audio. In order to recognize the recorded image and audio as the file and properly reproduce them, it is necessary that not only the image and video data but also the file management information is properly recorded in the medium.

An example of the image recording with respect to the semiconductor memory card is described. In the example, it is assumed that the image is recorded in the semiconductor memory card inserted into a recording device such as a camera recorder. During the image recording, the file management information constantly changes. For example, a value showing the size of the image file during current recording among the file management information gradually increases. Further, the information relating to the recording region allocated to the image file also changes.

In the case of recording the file management information in the semiconductor memory card when the image recording is completed, the recording operation is terminated before the file management information is recorded in the semiconductor memory card if a power supply is suddenly turned off during the image recording, and the file management information relating to the recorded image fails to be properly recorded in the semiconductor memory card. Then, the semiconductor memory card is removed from the recording medium and inserted into another recording / reproducing device so that the image file of the semiconductor memory card is reproduced, an error, such as the absence of the file or the file size being zero, is generated.

In order to deal with the power shutdown during the recording operation a method can be thought that the file management information is periodically recorded in the semiconductor memory card during the image recording. For example, the file management information is periodically recorded in the semiconductor memory card once per second during the image recording. In that case, even though the power is shutdown during the recording operation, the file management information up to one second before the power shutdown can be recorded in the medium. Therefore, the image on the way of recording at that time is present as the file in the semiconductor memory card, and the file size and the allocation status of the recording region, which shows their states one second earlier, are recorded. When the image file (semiconductor memory card) is reproduced, the images from initiation of the recording operation until one second before the power shutdown can be reproduced.

Meanwhile, the semiconductor memory card is limited in the number of times to rewrite the data. In the case of employing the method described earlier in which the file management information is periodically updated once per second during the recording operation, the file management information is consequently updated 60 minutes × 60 seconds = 3,600 times when, for example, the images are recorded for 60 minutes. Further, in the case where a recording spot (address) of the file management information is fixed in the recording region of the semiconductor memory card, the data is repeatedly rewritten at the recording spot of the file management information alone, which unfavorably increases the number of the rewriting operations. As a result, a service life of the semiconductor memory card in terms of the number of the rewriting operations is attained earlier than expected.

As conventional examples in which the rewriting life of the semiconductor memory card is improved, the methods recited in the Patent Literatures 1 and 2 are known.
- Patent Literature 1:: No. 2584120 of the Japanese Patent
- Patent Literature 2:: No. 2001-188701 of the Japanese Patent Applications Laid-Open
A conventional example is described below referring to Fig. 8. Fig. 8 is a conceptual view of the memory card recording method recited in the Patent Literature 1, and reference numerals 201, 202, 203 and 204 shown in Fig. 8 each denotes a memory block. These memory blocks are called erasing blocks or erasable blocks, wherein data is erased per block as a characteristic of a non-volatile semiconductor memory.

Kinds of the erasure are described here. The data erasure per memory block means that a semiconductor memory element in the memory block is returned to an initial state without any writing. Such an erasure is hereinafter called a physical data erasure. In the case of deleting the file using the file system or the like, only the file management information is updated, while the actual file data remains on the memory block. Such an erasure is hereinafter called a logical data erasure.

It is assumed to be in the state that the data is already written in the memory block 201 and retained therein. An address A is allocated to the memory block 201. On one hand, it is assumed to be in the state that there is no data written in the memory block 204 and the memory block 204 is secured as a preliminary block. An address D is allocated to the memory block 204.

When an access request for updating the data is made to the address A in the foregoing state, first, the address A is exchanged with the address D. Then, the memory block 204 that was the preliminary block now becomes the address A. The update data is written in the memory block 204 to which the address A is allocated, while the data in the memory block 201 to which the address D is allocated is physically erased, and the memory block 204 is secured as the preliminary block. Accordingly, when the rewriting request is intensively made to the particular address A alone, the data is rewritten alternately in the relevant block and the preliminary block. As a result, the data is rewritten 1/2 times as frequently as usual per block, which improves the life on the rewriting number of times.

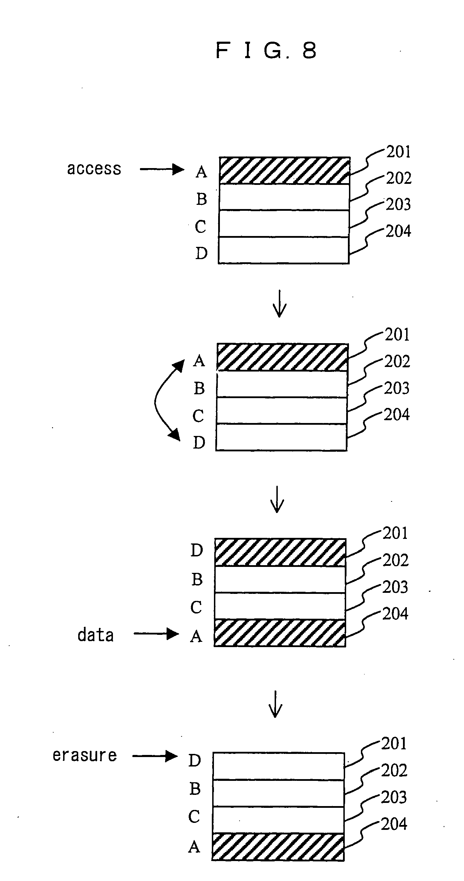

However, the rewriting life is unfavorably determined by the number of the preliminary blocks prepared in advance in the conventional method, as is described below. Assuming that the data is retained not only in the memory block 201 but also in the memory blocks 202 and 203 in Fig. 8, the block, that can be a alternate block wherein the data is rewritten through the address exchange, is only the memory block 204 in which the data is not retained. Therefore, when the address A is accessed for the data update, the data is written in the memory block 204, and the data in the memory block 201 is physically erased and secured as the preliminary block. When the access for the data update is made to the address A again, the data is written in the memory block 201, and the data in the memory block 204 is physically erased and secured as the preliminary block. Thus, when the access for the data update is intensively made to the address A, the memory blocks 202 and 203 in which the data is retained are not subjected to the address change, and the memory blocks 201 and 204 alone are alternately used for the rewriting operation.

If 20,000 rewriting accesses are made to the address A, for example, the data in the memory blocks 201 and 204 are alternately rewritten, respectively 10,000 times, and the rewriting operation is not executed to the memory blocks 202 and 203. If an upper limit of the number of the rewriting operations is 10,000 times respectively in the memory blocks 201 and 204, the rewriting life of the memory card is already over at this point.

When the number of the preliminary blocks is increased to be two, the data rewriting is executed in the three blocks in total, which are the two preliminary blocks and one block for retaining the data, and the rewriting number of times is thereby divided. If the three memory blocks have the rewriting life respectively up to 10,000 times, the data can be rewritten at most 30,000 times in relation to the address A. However, in the foregoing case in which two of the four memory blocks are the preliminary blocks, a memory capacity allowed for a user as the memory card is the other two blocks.

Thus, the rewriting life is improved when a large number of preliminary blocks are secured, while the usable memory capacity of the semiconductor memory card is reduced. On the contrary, the semiconductor memory card has a shorter rewriting life when the number of the preliminary blocks is reduced though the usable memory capacity is increased. As the number of the preliminary blocks in the semiconductor memory card is generally often a fixed value, it is difficult to change the number of the preliminary blocks to be used according to the intended purposes of the memory capacity and the rewriting number of times. Therefore, when the semiconductor memory card is used in such a manner that the data at the same address, such as the file management information, is repeatedly updated a number of times under a small number of preliminary blocks prepared in advance, as described earlier, the rewriting life of the semiconductor memory card is attained earlier than expected.

In the conventional method, as the number of the memory blocks in the semiconductor memory card increases the number of the addresses also increases. As a result, the address exchange is more time-consuming. In particular, a product provided with a semiconductor memory card having a capacity of as large as one gigabyte was recently launched into the market, and the number of the memory blocks in such a semiconductor memory card is enormous. If a large amount of time is required to exchange the addresses, a processing speed of the data update is reduced, and it cannot be handled even if the data recording under demanding a high bit rate, such as the image recording, is performed.

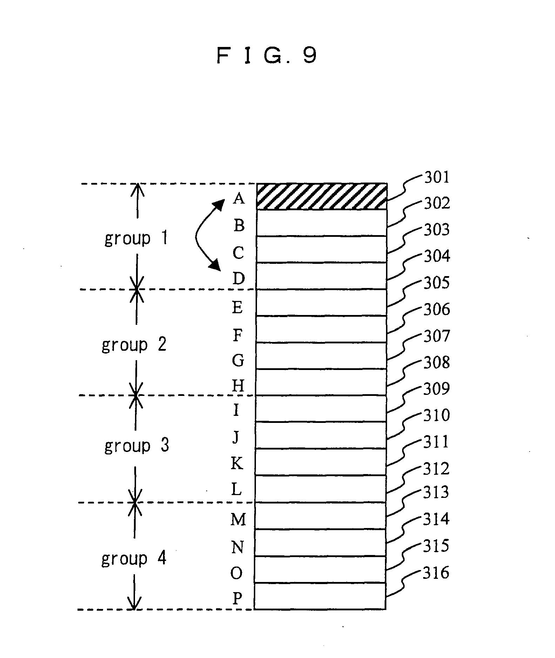

As a possible solution for the foregoing problem, the enormous number of memory blocks is divided into a plurality of groups, as is described below referring to Fig. 9. Fig. 9 is a conceptual view of the group division in the memory card according to the conventional technology. Each of the reference numerals 301 - 316 shown in Fig. 9 denotes a memory block. These memory blocks are divided into a plurality of groups. Thememory blocks 301 through 304 belong to a group 1, the memory blocks 305 through 308 belong to a group 2, memory blocks 309 through 312 belong to a group 3, and the memory blocks 313 through 316 belong to a group 4.

The memory block 304 is in a state that no data is written therein, and is secured as the preliminary block. In the memory blocks 302 and 303, that are not the preliminary blocks but the ordinary memory blocks, are in a state that no new data has been written yet after the data therein is physically erased in a processing such as initialization. Thus, even the ordinary block not retaining any data, that is not the preliminary block, can be used for the rewriting operation in the same manner as the preliminary block. The method is described in detail in Fig. 20 of the Patent Literature 2 that the preliminary block and the memory block not retaining any data are used in a switch treatment in the rewriting.

In the preliminary block and the block not retaining any data, the switch treatment in the rewriting operation is implemented only inside the group to which the relevant blocks belong. The reason is that the number of the blocks to be processed can be decreased and the amount of time required for the switch treatment can be reduced when the switch treatment is performed on only the blocks in the same group resulting from the group division in comparison to the switch treatment on the enormous number of blocks in the entire memory card. In Fig. 9, the preliminary block is secured not only in the group 1 but also in the other groups. In Fig. 9, the number of the memory blocks in one group is four, which is the same as in Fig. 8, though the number of the memory blocks is increased to 16. When the data is updated, the address exchange is executed to the four addresses in the group. Therefore, the processing time of the address exchange in the group can be substantially equal to the processing time in the case of Fig. 8. In the case where the number of the memory blocks is large, the amount of time for exchanging the addresses in the switch treatment can be thus reduced through the group division.

In the conventional method, however, the rewriting operation is locally intensified, and thereby the rewriting life of the particular group is reached sooner than the others. The disadvantage is described below.

It is assumed in Fig. 9 that the file management information is retained in the memory block 301 (address A), the memory block 304 is the preliminary block, and the memory blocks 302 and 303 are the ordinary blocks, however, the data is not retained therein. When the file management information at the address A is repeatedly updated based on the assumption, the switch treatment of the rewriting operation is performed between the four blocks in total, which are the memory block 301, preliminary block 304, and memory blocks 302 and 303 not retaining any data therein, because the address A is present in the group 1. Because the switch treatment is limitedly implemented in the group, the number of the rewriting operations in any of the memory blocks in the group 1 is consequently increased in comparison to that of the memory blocks in the other groups, and the rewriting lives of the memory blocks in the group 1 is attained earlier than those in the other groups. The memory blocks 302 and 303, which are the ordinary blocks, are in a state to retain the data once the data is written therein, and are not any more used in the switch treatment until the written data therein is updated again. When the rewriting request is intensively made to the same address in the foregoing state, only the two blocks in total, which are the memory block 301 and the preliminary block 304, are used in a switch treatment for the rewriting operation. Then, the rewriting life of the two blocks is attained sooner than that in the case where the four blocks are used in the switch treatment. Thus, the group containing the frequently updated information such as the file management information has a shorter rewriting life than that of the other groups.

The group division in Fig. 9 shows the example that the memory blocks are divided into the groups by the predetermined number in the order of the addresses. However, there are other various methods for the group division. For example, in Fig. 9, the memory blocks may be divided in such a manner that the memory blocks 301, 303, 305, ... 315 are divided into a group of odd-number addresses and the memory blocks 302, 304, 306, 316 are divided into a group of an even-number addresses, or in such a group division in an interleave manner as 301, 305, 309, 313, .... In any of the methods, however, the group that retains the information often updated has a rewriting life shorter than that of any other group in terms of the number of the rewriting operations.

### DISCLOSURE OF THE INVENTION

### PROBLEMS TO BE SOLVED BY THE INVENTION

A problem to be solved by the present invention is that any memory block of a group including an information to be often updated has a rewriting life shorter than that of any block in other groups in the case where number of preliminary blocks previously prepared in a semiconductor memory card cannot be changed or the switch treatment is performed in the memory blocks that are divided into a plurality of groups. As a result, available number of years on the semiconductor memory card is unfavorably shortened.

### MEANS FOR SOLVING THE PROBLEM

The present invention relates to a recording medium of non-volatile semiconductor and a recording method for the recording medium, wherein a partition management information region and a partition region are set in the medium. Information of a start position of the partition region is recorded in the partition management information region. The start position information includes a value at which a predetermined region is secured between a terminal end of the partition management information region and a starting end of the partition region. The region secured between the terminal end of the partition management information region and the starting end of the partition region, is made to be a state that data is physically erased. The foregoing constitution is the most important feature in the present invention.

### EFFECT OF THE INVENTION

According to the present invention, a switch region is secured in a specific region on the medium. In the switch region, a region that is not used for recording data is secured. Therefore, the switch region can maintain the state without retaining the data therein once the data is physically erased, and can be used for a switch treatment when the data is updated therein. Thereby, a number of memory blocks can be subjected to the switch treatment even if a particular data alone is often updated, which reduces number of rewriting operations in one memoryblock. As a result, the reduction of the available number of years on the recording medium of non-volatile semiconductor is can be prevented even if the medium is used in such a manner that the management information, or the like, is often updated.

### BRIEF DESCRIPTION OF THE DRAWINGS

Fig. 1 shows a recoding format of information recording medium according to the present invention.
Fig. 2 shows an example of the recording format and allocation of memory blocks according to the present invention.
Fig. 3 shows a recoding format of information recording medium according to the present invention.
Fig. 4 shows an example of the recording format and allocation of memory blocks according to the present invention.
Fig. 5 shows a recoding format of information recording medium according to the present invention.
Fig. 6 shows an example the recording format and of allocation of memory blocks according to the present invention.
Fig. 7A shows a part in a file allocation table of the FAT file system according to a conventional technology.
Fig. 7B shows a part in a file allocation table of the FAT file system according to the present invention.
Fig. 8 is a conceptual view of a recording method for a memory card according to the conventional technology.
Fig. 9 is a conceptual view of group division in the memory card according to the conventional technology.
Fig. 10 shows a recoding format of information recording medium according to the conventional technology.
Fig. 11 shows an example of the recording format and allocation of memory blocks according to the conventional technology.

### DESCRIPTION OF REFERENCE SYMBOLS

- 100: partition management information region
- 110: switch region
- 120: partition boot information region
- 130: file management information region
- 140: user data region
- 400 - 447: memory block

### PREFERRED EMBODIMENTS OF THE PRESENT INVENTION

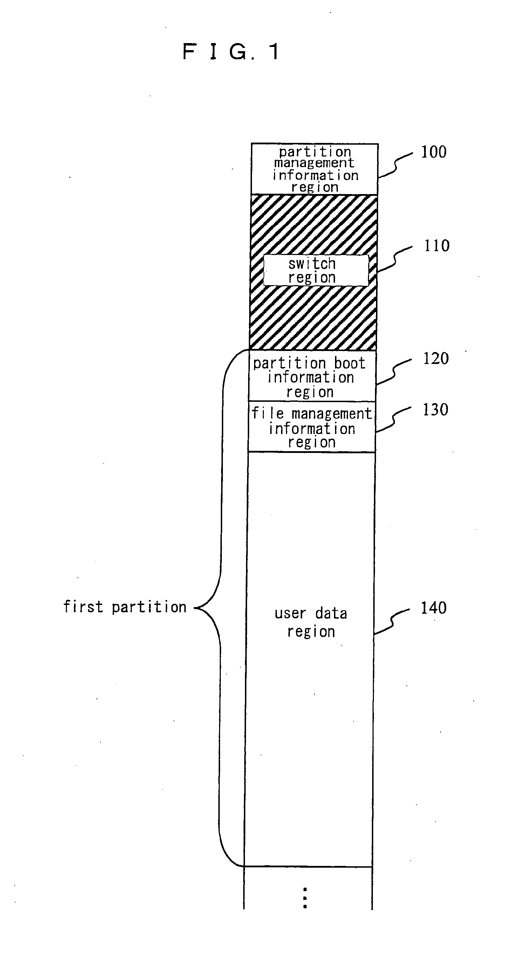

PREFERRED EMBODIMENT 1
Fig. 1 shows a recording medium of non-volatile semiconductor, a recording format of the medium, and a recording method for the medium according to a preferred embodiment 1 of the present invention. Referring to reference numerals shown in Fig. 1, 100 denotes a partition management information region, 110 denotes a switch region, 120 denotes a partition boot information region, 130 denotes a file management information region, and 140 denotes a user data region. The partition management information region 100, which is also called master boot record, includes information such as a start position, size and type of a partition present in the recording medium, a code for reading an activation code from the partition, and the like. The partition boot information region 120 , which is also called partition boot record, includes various information in the partition and the activation code. The file management information region 130 includes a file management information dependent on a file system. For example, if the file system is the FAT file system, a file allocation table is stored in the region. In the user data region 140, file entity and directory information are recorded.

A region from a starting end of the partition boot information region 120 through a terminal end of the user data region 140 corresponds to a first partition of the recording medium. A plurality of partitions can be provided in one recording medium, in that case subsequent partitions follow the first partition. The description is given below based on an example where one partition is provided in order to simplify the explanation.

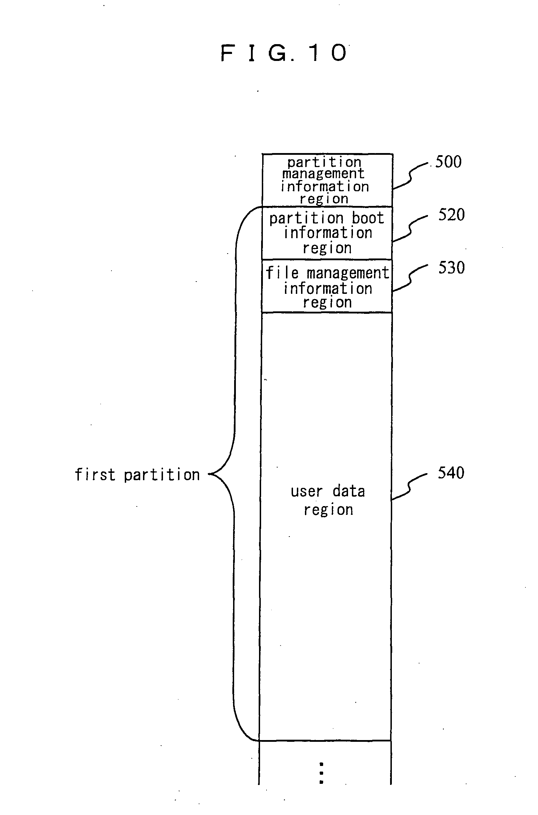

For comparison, a conventional recording format is described. Fig .10 shows a recording format of a recording medium of non-volatile semiconductor according to the conventional technology. Referring to reference numerals shown in Fig. 10, 500 denotes apartitionmanagement information region, 520 denotes a partition boot information region, 530 denotes a file management information region, and 540 denotes a user data region. These regions correspond to the regions described referring to Fig. 1, and a region from a starting end of the partition boot information region 520 through a terminal end of the user data region 540 corresponds to a first partition. However, the switch region is not secured between a terminal end of the partition management information region 500 and a starting end of the first partition in the conventional recording format shown in Fig. 10, which is a difference between the conventional technology and the preferred embodiment 1 of the present invention.

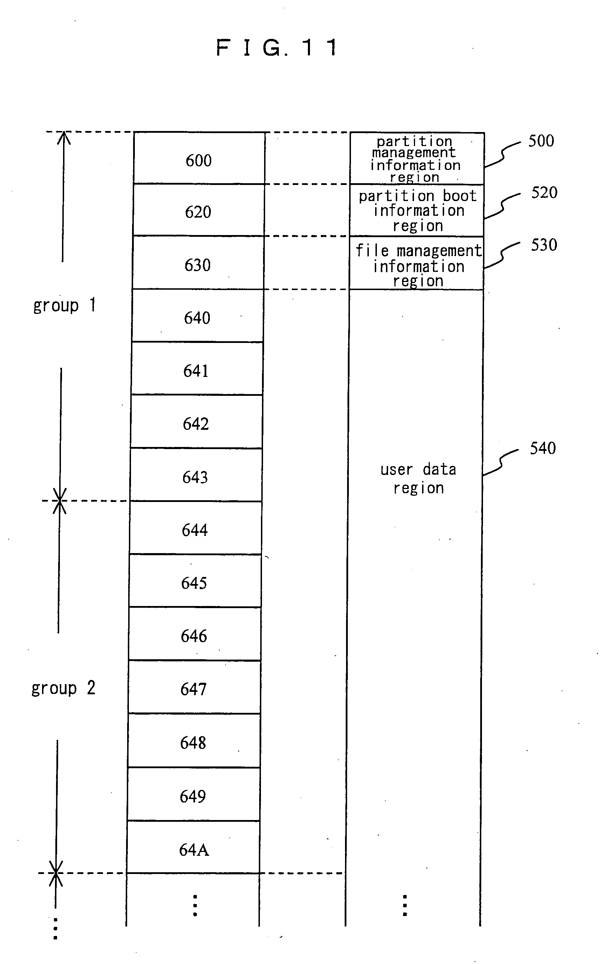

An influence generated from the absence of the secured switch region is described referring to Fig. 11. Fig.11 shows an example of the conventional recording format and allocation of the memory blocks. Referring to reference numerals shown in Fig. 11, 500 denotes a partition management information region, 520 denotes a partition boot information region, 530 denotes a file management information region, and 540 denotes a user data region, and these regions is the same as the regions described referring to Fig. 10. Reference numerals 600, 620, 630, 640 - 643 and 644 - 64A shown in Fig. 11 each denotes a memory block, and these memory blocks are called erasing blocks or erasable blocks, in which the data is physically erased per block. In the description below, the various information regions are allocated to one memory block, however, are actually allocated to a plurality of memory blocks depending on sizes of the information regions.

The memory blocks are divided into groups. The memory blocks 600, 620, 630 and 640 - 643 belong to a group 1, and the memory blocks 644 - 64A belong to a group 2. Though not shown, a predetermined number of preliminary memory blocks (preliminary blocks) are present in each group.

When the data in the memory block is updated, the switch treatment is performed between the preliminary block or the memory block not retaining the data in the same group as described in the DESCRIPTION OF THE RELATED ART.

The partition management information region 500 is allocated to the memory block 600, the partition boot information region 520 is allocated to the memory block 620, the file management information region 530 is allocated to the memory block 630, and the user data region 540 is allocated to the memory blocks 640 - 64A.

With respect to the constitution of Fig. 11 thus set above, its operation is describedbelow. Assuming that an image file is recorded in the user data region 540, the file management information region 530 is periodically updated into a latest state during the recording operation to be ready for occurrence of power shutdown. Accordingly, the data in the file management information region 530 is often updated.

In Fig. 11, the file management information region 530 is allocated to the memory block 630 at this stage. When the data is updated, the switch treatment is performed between the memory block 630 and the preliminary block or the memory block not retaining the data in the group 1 to which the memory block 630 belongs. However, in the group 1, the memory block 600 retains the data of the partition management information region 500 and the memory block 620 retains the data of the partition boot information region 520. Further, the memory blocks 640 - 643 retain the directory information and data of the image file. Therefore, all of the memory blocks except for the preliminary block retain the data in the group 1, and therefore, cannot be used for the switch treatment. Here, If it is presumed that each group has one preliminary block, the switch treatment is performed between the relevant memory block and the one preliminary block. As a result, the data is alternately rewritten in the two memory blocks alone, which are the memory block 630 and the preliminary block, when the data of the file management information region 530 is often updated. Thereby, the number of the rewriting operations increases in these two memory blocks and consequently the rewriting lives of these memory blocks is attained sooner than the other memory blocks.

In contrast, in the constitution according to the preferred embodiment 1, the switch region 110 is provided between the terminal end of the partitionmanagement information region 100 and the starting end of the first partition. The switch region 100, which is outside the range of the first partition, cannot be accessed by the file system that manages inside the partition. Therefore, the data in the switch region 110 is physically erased when the recording medium is initialized or the like, so that the data is not recorded in the switch region 110. As a result, the memory block in the switch region 110 can maintain the state where no data is retained therein.

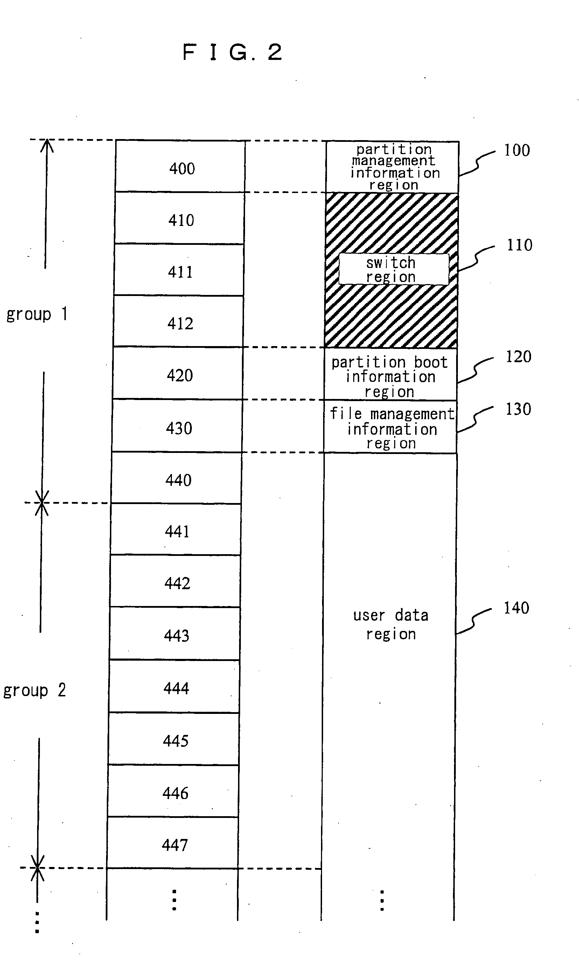

An operation of the recording format in which the switch region 110 is provided according to the present invention is described referring to Fig. 2. Fig. 2 shows an example of the recording format and allocation of the memory blocks according to the present invention. Referring to reference numerals shown in Fig. 2, 100 denotes a partition management information region, 110 denotes a switch region, 120 denotes a partition boot information region, 130 denotes a file management information region, and 140 denotes a user data region. These regions are identical with those described referring to Fig. 1. In Fig. 2, each of reference numerals 400, 410 - 412, 420, 430, 440 and 441 - 447 denotes a memory block. The memory blocks are divided into groups. The memory blocks 400, 410 - 412, 420, 430 and 440 belong to a group 1, and the memory blocks 441 - 447 belong to a group 2. Though not shown, a predetermined number of preliminary memory blocks (preliminary blocks) are present in each group. The partition management information region 100 is allocated to the memory block 400, the switch region 110 is allocated to the memory blocks 410 - 412, the partition boot information region 120 is allocated to the memory block 420, the file management information region 130 is allocated to the memory block 430, and the user data region 140 is allocated to the memory blocks 440 - 447.

With respect to the constitution of Fig. 2 thus set as above, its operation is described below. Assuming that an image file is recorded in the user data region 140, the file management information region 130 is periodically updated into a latest state during the recording operation to be ready for power shutdown. Accordingly, the data in the file management information region 130 is often updated.

In Fig. 2, the file management information region 130 is allocated to the memory block 430 at this stage. When the data is updated, the switch treatment is performed between the memory block 430 and the preliminary block or the memory block not retaining the data in the group 1 to which the memory block 430 belongs. In the group 1, the memory block 400 retains the data of the partition management information region, and the memory block 420 retains the data of the partition boot information region. Further, the memory block 440 retains the directory information and data of the image file. However the memory blocks 410 - 412 serve as the switch region retaining no data, and can be used for the switch treatment. Presumed that each group has one preliminary block, the preliminary block can also be used for the switch treatment. As a result, the switch treatment of the data is performed between the five memory blocks in total, which are the memory blocks 430 and 410 - 412 and the preliminary block, when the data of the file management information region 130 is often updated.

In the conventional example in Fig. 11 described earlier, the data of the file management information region is updated using only the two memory blocks of the memory block 630 and the preliminary block. In contrast to that, in Fig. 2 according to the present invention, the five memory blocks can be used alternately for the data-update. Provided that the data of the file management information region is updated 3,600 times in the image recording for an hour, in the conventional technology where the two memory blocks are used, the rewriting number of times per one memory block becomes 3,600 times / two memory blocks = 1,800 times, while it becomes 3,600 / five memory blocks = 720 times in the present invention. In the present invention, the rewriting number of times per one memory block can be reduced in comparison to the conventional example.

Fig. 2 shows the example in which the number of the memory blocks in one group is seven, the number of the preliminary block in one group is one, and the three memory blocks are secured as the switch region in order to simplify the description. However, the actual number of the memory blocks in one group in the semiconductor memory card is a few hundreds through a few thousands. Therefore, a larger number of memory blocks can be secured as the switch region, which largely reduces the rewriting number of times per one memory block. Thus, the switch region is secured in the same group to which the memory block including the data to be often updated belongs so that the rewriting number of times per one memory block can be reduced in comparison to the conventional example. As a result, the rewriting life of the recording medium can be increased.

The switch region is provided outside the partition in the preferred embodiment 1. More specifically, the start position of the first partition is lowered in comparison to the conventional technology so that a blank region is provided between the partition management information region (master boot record) and the start position of the first partition. Then, the data in the blank region is physically erased so that the blank region can be allocated as the switch region. The information such as where the first partition starts can be recorded in the partition management information region. In the preferred embodiment 1, the switch region can be secured irrespective of the type of the file system that manages the partition because the switch region is outside the range of the partition. Therefore, the switch region can be secured irrespective of the type of the file system even in the case where recording medium is managed under the FAT file system, UDF (Universal Disc Format) file system or any other file system.

In the case of providing at least two partitions in the recording medium in addition to the method described in the preferred embodiment 1, a start position of the second partition is lowered in place of starting the secondpartition immediately after an ending position of the first partition so that the switch region can be secured between the ending position of the firstpartition an the startposition of the secondpartition in a similar manner. As a result, the rewriting life of the recording medium can be increased with respect to the second partition in a similar manner.

PREFERRED EMBODIMENT 2
Next, a recording medium of non-volatile semiconductor in which the switch region is secured in the partition, a recording format of the medium and a recording method for the medium are described. The format inside the partition depends on the type of the file system. A preferred embodiment 2 of the present invention is described below referring to the FAT file system.

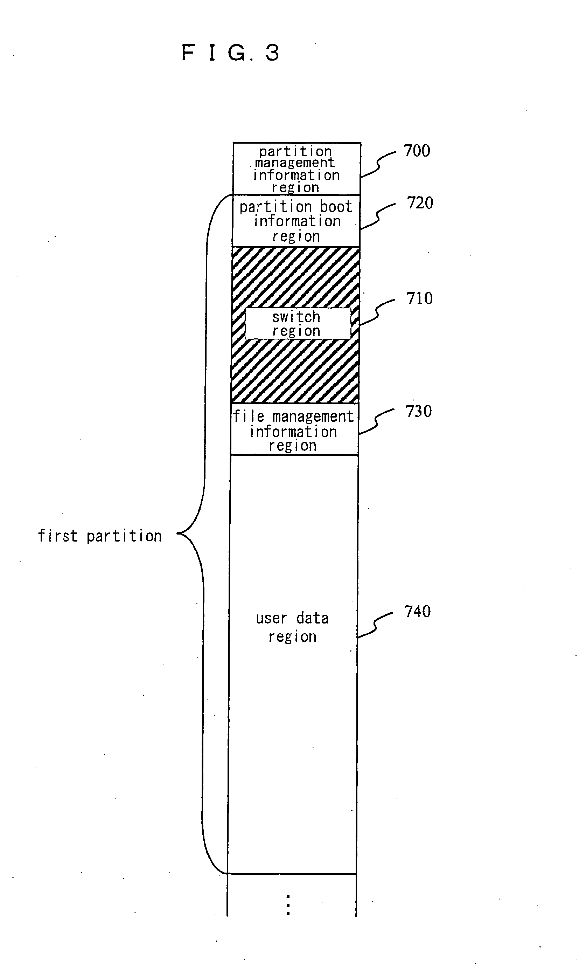

Fig. 3 shows a recording medium of non-volatile semiconductor, a recording format of the medium and a recording method for the medium according to the preferred embodiment 2. Referring to reference numerals shown in Fig. 3, 700 denotes a partition management information region, 720 denotes a partition boot information region, 710 denotes a switch region, 730 denotes a file management information region, and 740 denotes a user data region. These regions are identical with those described referring to Fig. 1.

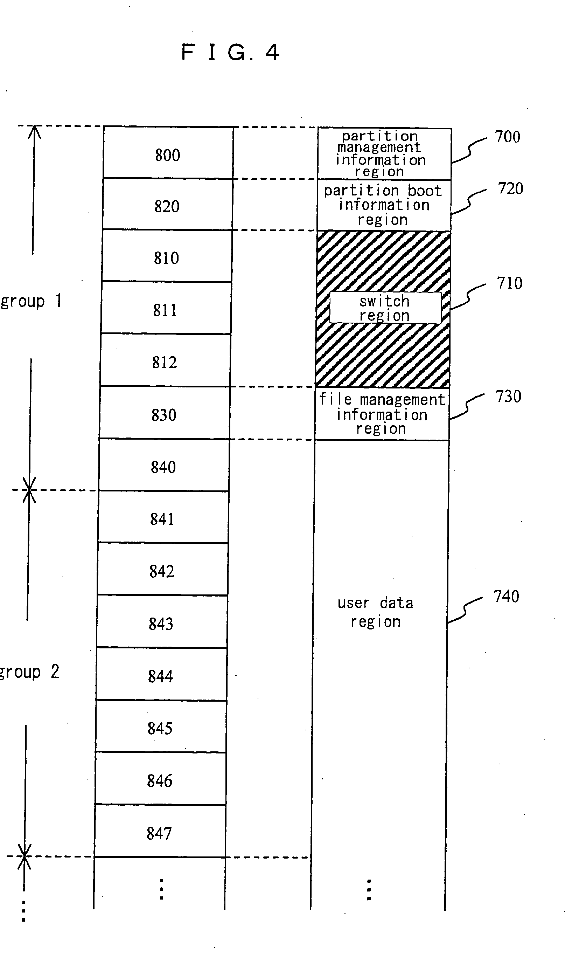

Next, how the respective regions are allocated to the memory blocks is described referring to an allocation example shown in Fig. 4. Fig. 4 shows the example of the recording format and the allocation of the memory blocks according to the present invention. Referring to reference numerals shown in Fig. 4, 700 denotes a partition management information region, 720 denotes a partition boot information region, 710 denotes a switch region, 730 denotes a file management information region, and 740 denotes a user data region. These regions equal to those shown in Fig. 3. Each of the reference numerals 800, 820, 810 - 812, 830, 840 and 841 - 847 shown in Fig. 4 denotes a memory block. The memory blocks are divided into groups. The memory blocks 800, 820, 810 - 812, 830 and 840 belong to a group 1, and the memory blocks 841 - 847 belong to a group 2. Though not shown, a predetermined number of preliminary memory blocks (preliminary blocks) are present in each group. The partition management information region 700 is allocated to the memory block 800, the partition boot information region 720 is allocated to the memory block 820, the switch region 710 is allocated to the memory blocks 810 - 812, the file management information region 730 is allocated to the memory block 830, and the user data region 740 is allocated to the memory blocks 840 - 847.

Details of the constitution of Fig. 4 thus set above are further described. In the FAT file system, number of reserved sectors can be set in the partition boot information region 720. The number of the reserved sectors is a numeral value showing how many sectors are secured in a region prior to the start position of the file allocation table (file management information region 730 shown in Fig. 4). "1" was conventionally often set as the numeral value because only the partition boot information region 720 is present in a position prior to the file allocation table and the number of the sectors is generally "1". In the present invention, a predetermined numeral value is set as the number of the reserved sectors so that the start position of the file allocation table is lowered, and a region generated by lowering the start position of the file allocation table is allocated to the switch region 710.

In the FAT file system, 16 bits are allocated to the set value of the number of the reserved sectors. Therefore, the 16th power of 2 - 1 = 65,535 sectors at maximum can be secured as the reserved sectors. Provided that one sector of the recording medium has 512 bytes, a securable size is 65,535 sectors × 512 bytes = 33,553,920 = approximately 32 MB (mega bytes) at maximum. The information present in the region prior to the file allocation table is the partition boot information region 720. Further, there is other information depending on the type of the FAT file system, which is accessed by the file system. However, these other information approximately has only a few sectors, and most of the regions secured by the number of the reserved sectors are blank regions inaccessible by the FAT file system. Therefore, when the data in the memory blocks allocated to the blank regions is physically erased, the memory blocks can be made to maintain the state where no data is retained therein because no data is written therein by the file system .

In Fig. 4, the memory blocks 810 - 812 are allocated to the secured switch region 710. In this state, when the data update is often implemented to the file management information region 730, the switch treatment is performed between the memory block 830 and the preliminary block or the memory block not retaining any data in the group 1 to which the memory block 830 belongs. In the group 1, the memory block 800 retains the data of the partition management information region 700, and the memory block 820 retains the data of the partition boot information region 720. Further, the memory block 840 retains the directory information, data of the image file and the like. However, the memory blocks 810 - 812, which serve as the switch region, do not retain any data and can be used for the switch treatment. Presumed that each group has one preliminary block, the preliminary block can also be used for the switch treatment. As a result, the switch treatment is performed between the five memory blocks in total, which are the memory block 830, memory blocks 810 - 812 and one preliminary block, when the data of the file management information region 730 is often updated. The foregoing status is the same as described in the preferred embodiment 1 referring to Fig. 2, wherein the five memory blocks are used for the switch treatment, which reduces the rewriting number of times in one memory block. As a result, the rewriting life of the recording medium can be improved in the recording format according to the preferred embodiment 2.

In a constitution wherein the partition is not prepared in the recording medium, it is unnecessary to provide the partition management information region 700 shown in Figs. 3 and 4. In the preferred embodiment 2, the number of the reserved sectors is set in the partition boot information region 720 so that the switch region 720 is secured. Accordingly, the format capable of securing the switch region 710 can be set in the preferred embodiment 2 irrespective of with or without the partition management information region 700. Therefore, the preferred embodiment 2 can achieve an effect similar to that of the preferred embodiment 1 even in the absence of the partition management information region 700.

In the preferred embodiment 2, the description was given with respect to the FAT file system as example, however, the preferred embodiment 2 can be applied to the UDF file system. In the UDF file system, a space bitmap showing a use condition of each sector in the recording medium is present in the file management information region 730 shown in Fig. 3. It is thought that the space bitmap is often updated in order to deal with the power shutdown during the image recording. A start position of the space bitmap on the recording medium can be arbitrarily set. In the UDF, a region called a main volume descriptor sequence is present in a part of the partition boot information region 720 shown in Fig. 3, and there is a partition descriptor in the region. The start position of the space bitmap can be described in the partition descriptor. Therefore, if the start position is described therein so that the space bitmap can start at a position lower than usual, the switch region 710 can be secured because the position of the file management information region 730 shown in Fig. 3 is lowered. As a result, a similar effect can be obtained since the number of the memory blocks usable for the switch treatment is increased.

A few other constitutions for securing an unused region were proposed for the UDF file system. An effect similar to that of the preferred embodiment described earlier can be obtained if these constitutions are utilized to secure the unused region and the data in the memory blocks in the region is physically erased.

There are various file systems other than the FAT file system and the UDF file system described above. However, the region that is not used for the recording is secured in the respective file systems in different manners, it is neglected to explain all of them here. If the region which is not used for the recording is secured based on rules of the relevant formats and the data in the region is physically erased in the other file systems as described referring to the FAT file system and UDF file system, an effect similar to that of the present invention can also be obtained.

PREFERRED EMBODIMENT 3
Next, a recording medium of non-volatile semiconductor in which the switch region is secured in the user data region in the partition, a recording format of the medium and a recording method for the medium are described. The format inside the partition depends on type of the file system. A preferred embodiment 2 of the present invention is described below referring to the FAT file system.

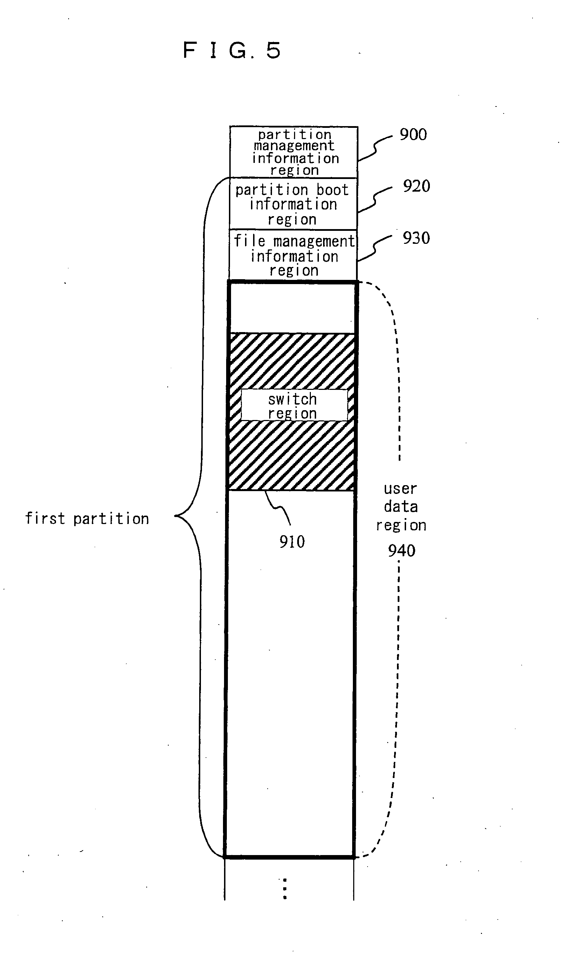

Fig. 5 shows a recording medium of non-volatile semiconductor, a recording format of the medium and a recording method for the medium according to the present invention. Referring to reference numerals shown in Fig. 5, 900 denotes a partition management information region, 920 denotes a partition boot information region, 930 denotes a file management information region, and 940 denotes a user data region, and 910 denotes a switch region. These regions is identical with those described referring to Fig. 1. In Fig. 5, the switch region 910 is secured inside the user data region 940.

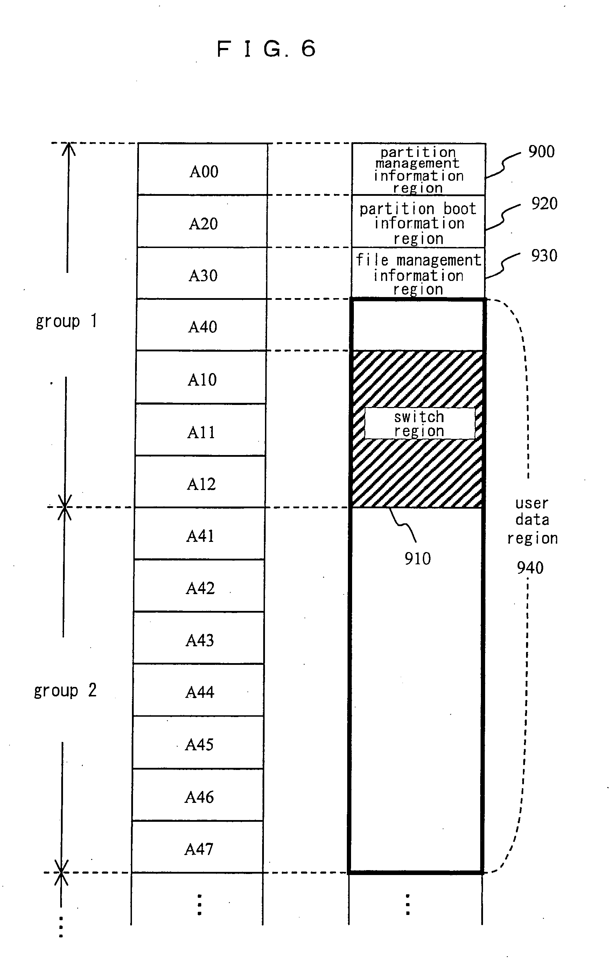

Next, how the respective regions are allocated to the memory blocks is described referring to an allocation example shown in Fig. 6. Fig. 6 shows the example of the recording format and the allocation of the memory blocks according to the present invention. Referring to reference numerals shown in Fig. 6, 900 denotes a partition management information region, 920 denotes a partition boot information region, 930 denotes a file management information region, and 940 denotes a user data region, and 910 denotes a switch region. These regions equal to those described referring to Fig. 5. Further, in Fig. 6, each of reference numerals A00, A20, A30, A40, A10 - A12 and A41 - A47 denotes a memory block. The memory blocks are divided into groups. The memory blocks A00, A20, A30, A40, A10 - A12 belong to a group 1, and the memory blocks A41 - A47 belong to a group 2. Though not shown, a predetermined number of preliminary memory blocks (preliminary blocks) are present in each group. The partition management information region 900 is allocated to the memory block A00, the partition boot information region 920 is allocated to the memory block A20, the file management information region 930 is allocated to the memory block A30, the user data region 940 is allocated to the memory blocks A40, A10 - A12 and A41 - A47, and the switch region 910 is allocated to the memory blocks A10 - A12 in the user data region.

The constitution of Fig. 6, which is set in a state as above, is further described in detail below. In the FAT file system, the recording region is managed per cluster. The cluster is an assembly of the sectors. For example, provided that 1 cluster = 32 sectors, 1 sector = 512 bytes, a size of one cluster is 1 cluster = 32 sectors × 512 bytes = 16 KB (kilobytes). When the file or the directory information is recorded in the region of 16 Kbytes, the relevant cluster has already been allocated. The file allocation table is set in the file management information region 930. In the table, information for managing a use condition of the user data region 940 per cluster is recorded.

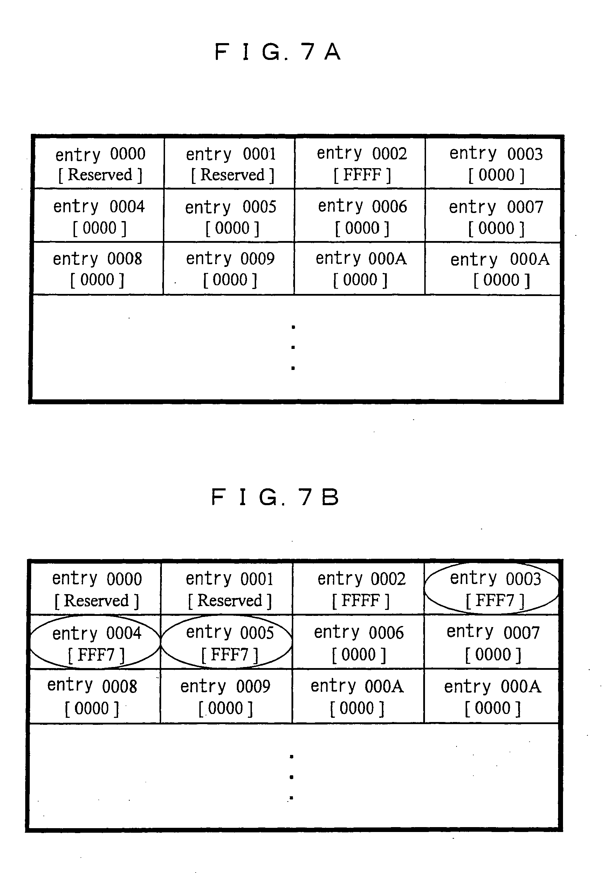

The file allocation table of the file management information region 930 are described in detail referring to Figs. 7A and 7B. Figs. 7A and 7B shows a part of the file allocation table of the FAT file system. Fig. 7A shows an example of the file allocation table initialized according to the conventional format. An entry in the file allocation table denotes a use condition of one cluster. If the entry shows "0000", the cluster corresponding to the entry is in a blank state, and "FFFF" means that the relevant cluster is used, and the terminal end of the file or directory is present in the cluster. In the absence of the terminal end in the cluster, an entry number of the cluster in which the subsequent data is present is set. In Fig. 7A, an entry 0002 is "FFFF", and it is learnt that the relevant cluster is used by the file or directory. Because a root directory is present in the FAT file system without exception, the entry 0002 is often under a use condition by the root directory even after the recording medium is initialized. Further, in terms of restrictions of the FAT file system, entries 0000 and 0001 are in a reserved state or the like. Except for the foregoing entries 0000 - 0002, all of entries in the file allocation table initialized according to the conventional format are in the blank state 0000.

Fig. 7B shows an example of the file allocation table initialized according to the recording format of the present invention. A difference between Figs. 7A and 7B is that states of the entries 0003 - 0005 are made to be "FFF7". "FFF7" denotes that the cluster corresponding to the entry is a defective cluster, that is the cluster wherein the data cannot be normally written or read due to a failure of the recording medium, or the like. In the format according to the present invention, a predetermined number of clusters are previously registered in the file allocation table as the defective clusters at the time of the initialization, even though they are not actually the defective clusters. The defective cluster is not used when the file or directory is recorded in the FAT file system, and no data is written in the clusters corresponding to the entries 0003 - 0005. Therefore, when the data in these clusters is physically erased at initialization, the memory blocks corresponding to these clusters can be allocated as the switch region because they are in a state without including any data.

The switch region secured by the manner described above is the switch region 910 shown in Fig. 6. In Fig. 6, when the data update is often implemented to the file management information region 930, the switch treatment is performed between the memory block A30 and the preliminary block or the memory block not retaining any data in the group 1 to which the memory block A30 belongs. In the group 1, the memory block A00 retains the data of the partition management information region, and the memory block A2 0 retains the data of the partition boot information region. Further, the memory block A40 retains the directory information and the like. However, the memory blocks A10 - A12 can be used for the switch treatment because they are the switch region and do not retain any data. If each group has one preliminary block, the preliminary block can also be used for the switch treatment. As a result, the five memory blocks in total, which are the memory block A30, memory blocks A10 - A12 and one preliminary block, can be used for the switch treatment when the data of the file management information region 930 is often updated. The foregoing status is the same as described in the preferred embodiment 1 referring to Fig. 2, wherein the five memory blocks are used for the switch treatment. Thereby, the rewriting number of times per one memory block can be reduced. As a result, the rewriting life of the recording medium can be effectively improved even in the recording format according to the preferred embodiment 3.

In the format according to the present invention shown in Fig. 7B, the three clusters in total of the entries 0003 - 0005 are the defective clusters in order to simplify the description, however, a larger number of clusters may be actually used as the defective clusters.

The effect by the switch treatment can be obtained in the region made to be the defective clusters if the memory blocks belong to the same group as the file allocation table.

When "FFFO" - "FFF6" indicating the reserved state or "FFF8" - "FFFF" indicating the already-used state are used in place of "FFF7" indicating the defective cluster, a similar effect can be obtained because the data is not written in the relevant cluster. With respect to the bit expression of the entry of the file allocation table, 16 bits such as "FFF7" may be expressed by 12 bits of "FF7" or 32 bits of "FFFFFFF7" depending on the type of the FAT file system, wherein the present invention can be similarly applied.

The information such as the file size is recorded in the user data region as the directory information in the FAT file system. In the case of updating at frequent intervals not only the file allocation table but also the directory information such as the file size during the image recording, the switch region is secured by the format of the present invention in the same group as that of the memory block to which the frequently-updated directory information is allocated. As a result, a similar effect can be obtained.

When the directory in which the file size is frequently updated is prepared, the memory blocks may be allocated so as to belong to the group where the switch region is previously secured. For example, in Fig. 2, if the directory information is prepared in the region corresponding to the memory block 440, a similar effect can be obtained even though the directory information is frequently updated because the switch region 110 is secured in the same group.

There are many cases that the number of the preliminary block in the semiconductor recording medium is prepared at a previously determined number of pieces and it cannot be flexibly increased or decreased depending on the usage of the recording medium. However, the switch region is secured in the format of the recording medium according to the present invention, which allows the region size of the preliminary blocks to be changed. More specifically, it can be used depending on the applications because the number of the blocks used for the switch treatment can be changed depending on the format. For example, the format is made to secure a large switch region in the application of frequently updating the data so that the rewriting life can be improved. On the contrary, the format is made to secure a small switch region in the application of updating the data at low-frequency so that a large capacity used for the recording operation can be secured.

The recording formats described in the preferred embodiments 1 - 3 can be simultaneously used. It is known that performance on a recording rate is improved in such a manner that boundary of the partition and the boundaries of management information and user data region or the like in the file system, are brought together to a boundary of the memory blocks when the semiconductor memory card is used. Therefore, it is also effective to perform fine adjustments to the start position of each information region by combining the preferred embodiments 1 - 3 in order to bring together the various information regions to the boundaries of the memory blocks in addition to secure the necessary switch region.

### INDUSTRIAL APPLICABILITY

As mentioned above, an information recording format and an information recording medium according to the present invention can be used for recording information in a recording medium such as a semiconductor memory card, and particularly suitably use in the case where data is often rewritten in a specific region of the recording medium.

## Claims

1. A recording medium of non-volatile semiconductor comprising a partition management information region and a partition region, wherein
an information on a start position of the partition region is recorded in the partition management information region,
the start position information includes a value at which a predetermined region is secured between a terminal end of the partition management information region and a starting end of the partition region, and
the region secured between the terminal end of the partition management information region and the starting end of the partition region is in a state where data is physically erased.

2. A recording medium of non-volatile semiconductor comprising a partition management information region and N pieces (N is an integer at least two) of partition regions, wherein
an information on start positions of the N pieces of partition regions is recorded in the partition management information region,
the start position information includes a value at which a predetermined region is secured between a terminal end of the (N-1)th partition region and a starting end of the Nth partition region, and
the region secured between the terminal end of the (n-1) th partition region and the starting end of the nth partition region is in a state where data is physically erased.

3. A recording medium of non-volatile semiconductor in which information is recorded according to a recording format of a predetermined file system, wherein
a region which is not used for the recording is included in the recording format of the file system, and
the region which is not used for the recording is in a state where data is physically erased.

4. A recording medium of non-volatile semiconductor in which information is recorded according to a recording format of FAT file system, wherein
a partition boot information region and a file allocation table region are included,
an information on number of reserved sectors is recorded in the partition boot information region,
the information on the number of the reserved sectors includes a value at which a predetermined region is secured between a terminal end of the partition boot information region and a starting end of the file allocation table region, and
the region secured between the terminal end of the partition boot information region and the starting end of the file allocation table region is in a state where data is physically erased.

5. A recording medium of non-volatile semiconductor in which information is recorded according to a recording format of UDF file system, wherein
a partition descriptor information region and a space bit map region are included,
an information on a start position of the space bit map region is recorded in the partition descriptor information region,
the start position information includes a value at which a predetermined region is secured prior to a starting end of the space bit map region, and
the region secured prior to the starting end of the space bit map region is in a state where data is physically erased.

6. A recording medium of non-volatile semiconductor in which information is recorded according to a recording format of FAT file system, wherein
a user data region comprising a plurality of clusters and a file allocation table region are included,
an information on a state of each cluster in the user data region is recorded in the file allocation table region,
the state information includes a value indicating if a particular cluster is a defective cluster, a reserved cluster or an already-used cluster, and
a region of the cluster of the user data region corresponding to the particular cluster of the state information is in a state where data is physically erased.

7. A method of recording information in a recording medium of non-volatile semiconductor, wherein
a partition management information region and a partition region are set in the recording medium of non-volatile semiconductor,
an information on a start position of the partition region is recorded in the partition management information region, and a value at which a predetermined region is secured between a terminal end of the partition management information region and a starting end of the partition region is recorded as the start position information, and
the region secured between the terminal end of the partition management information region and the starting end of the partition region is in a state where data is physically erased.

8. A method of recording information in a recording medium of non-volatile semiconductor, wherein
a partition management information region and an N pieces (N is an integer at least two) of partition regions are set in the recording medium of non-volatile semiconductor, wherein
an information on start positions of the N pieces of partition regions is recorded in the partition management information region, and a value at which a predetermined region is secured between a terminal end of the (N-1)th partition region and a starting end of the Nth partition region is recorded as the start position information, and
the region secured between the terminal end of the (N-1) th partition region and the starting end of the Nth partition region is in a state where data is physically erased.

9. A method of recording information in a recording medium of non-volatile semiconductor according to a predetermined file system, wherein
a region which is not used for the recording is set in a recording format of the file system in the recording medium of non-volatile semiconductor, and
the region which is not used for the recording is in a state where data is physically erased.

10. A method of recording information in a recording medium of non-volatile semiconductor according to FAT file system, wherein
a partition boot information region and a file allocation table region are set in the recording medium of non-volatile semiconductor,
an information on number of reserved sectors is recorded in the partition boot information region, and a value at which a predetermined region is secured between a terminal end of the partition boot information region and a starting end of the file allocation table region is recorded as the information on the number of the reserved sectors, and
the region secured between the terminal end of the partition boot information region and the starting end of the file allocation table region is in a state where data is physically erased.

11. A method of recording information in a recording medium of non-volatile semiconductor according to UDF file system, wherein
a partition descriptor information region and a space bit map region are set in the recording medium of non-volatile semiconductor,
an information on a start position of the space bit map region is recorded in the partition descriptor information region, and a value at which a predetermined region is secured prior to a starting end of the space bit map region is recorded as the start position information, and
the region secured prior to the starting end of the space bit map region is in a state where data is physically erased.

12. A method of recording information in a recording medium of non-volatile semiconductor according to FAT file system, wherein
a user data region comprising a plurality of clusters and a file allocation table region are set in the recording medium of non-volatile semiconductor,
an information on a state of each cluster in the user data region is recorded in the file allocation table region, and a value indicating if a particular cluster is a defective cluster, a reserved cluster or an already-used cluster is recorded as the state information, and
a region of the cluster of the user data region corresponding to the particular cluster of the state information is in a state where data is physically erased.

13. An information recording format for a recording medium of non-volatile semiconductor, wherein
a partition management information region and a partition region are set in the recording medium of non-volatile semiconductor,
an information on a start position of the partition region is recorded in the partition management information region,
the start position information includes a value at which a predetermined region is secured between a terminal end of the partition management information region and a starting end of the partition region, and
the region secured between the terminal end of the partition management information region and the starting end of the partition region is in a state where data is physically erased.

14. An information recording format for a recording medium of non-volatile semiconductor, wherein
a partition management information region and N pieces (N is an integer at least two) of partition regions are set in the recording medium of non-volatile semiconductor,
an information on start positions of the N pieces of partition regions is recorded in the partition management information region,
the start position information includes a value at which a predetermined region is secured between a terminal end of the (N-1)th partition region and a starting end of the Nth partition region, and
the region secured between the terminal end of the (n-1) th partition region and the starting end of the nth partition region is in a state where data is physically erased.

15. An information recording format for a recording medium of non-volatile semiconductor in recording information according to a predetermined file system, wherein
a region which is not used for the recording is set in a recording format of the file system in the recording medium of non-volatile semiconductor, and
the region which is not used for the recording is in a state where data is physically erased.

16. An information recording format for a recording medium of non-volatile semiconductor in recording information according to FAT file system, wherein
a partition boot information region and a file allocation table region are set in the recording medium of non-volatile semiconductor,
an information on number of reserved sectors is recorded in the partition boot information region,
information on the number of the reserved sectors includes a value at which a predetermined region is secured between a terminal end of the partition boot information region and a starting end of the file allocation table region, and
the region secured between the terminal end of the partition boot information region and the starting end of the file allocation table region is in a state where data is physically erased.

17. An information recording format for a recording medium of non-volatile semiconductor in recoding information according to UDF file system, wherein
a partition descriptor information region and a space bit map region are set in the recording medium of non-volatile semiconductor,
an information on a start position of the space bit map region is recorded in the partition descriptor information region,
the start position information includes a value at which a predetermined region is secured prior to a starting end of the space bit map region, and
the region secured prior to the starting end of the space bit map region is in a state where data is physically erased.

18. An information recording format for a recording medium of non-volatile semiconductor in recording information according to FAT file system, wherein
a user data region comprising a plurality of clusters and a file allocation table region are set in the recording medium of non-volatile semiconductor,
an information on a state of each cluster in the user data region is recorded in the file allocation table region,
the state information includes a value indicating if a particular cluster is a defective cluster, a reserved cluster or an already-used cluster, and
a region of the cluster of the user data region corresponding to the particular cluster of the state information is in a state where data is physically erased.
